# FASCICULE DE BREVET EUROPEEN

(11) **EP 1 005 241 B1**
(45) Date de publication et mention de la délivrance du brevet: **26.10.2005**
(21) Numéro de dépôt: 99402753.0
(22) Date de dépôt: 05.11.1999
(51) Int. Cl.: H04Q 7/32

(54) **Procédé de communication entre un terminal mobile et un accessoire**
Kommunikationsverfahren zwischen einem mobilen Endgerät und dem Zubehör
Method for communication between a mobile terminal and an accessory

(30) Priorité: 26.11.1998 FR 9814876
(43) Date de publication de la demande: 31.05.2000
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Parisel, Arnaud, 75017 Paris (FR); Dugast, Xavier, 78400 Chatou (FR)
(74) Mandataire: Feray, Valérie

(56) Documents cités:
- EP-A- 0 830 044
- WO-A-90/08447
- US-A- 5 404 391
- US-A- 5 722 071
- SMITHSON G: "Introduction to digital modulation schemes" IEE COLLOQUIUM ON DESIGN OF DIGITAL CELLULAR HANDSETS (REF. NO.1998/240), IEE COLLOQUIUM ON DESIGN OF DIGITAL CELLULAR HANDSETS (REF. NO.1998/240), LONDON, UK, 4 MARCH 1998, pages 2/1-9, XP002111698 1998, London, UK, IEE, UK

## Description

La présente invention a pour objet un procédé de communication entre un terminal mobile et un accessoire. L'accessoire dont il est question peut être quelconque, typiquement un vibreur qui remplace une sonnerie pour alerter le porteur du terminal mobile de ce qu'il est appelé, sans faire de bruit, ou bien même un microphone-casque. Cependant l'accessoire peut aussi être une interface de liaison avec un organe périphérique plus complexe, tel qu'un micro-ordinateur.
Le but de l'invention est de faciliter cette communication tout en lui donnant de plus grandes capacités de transmission.

Dans le domaine des terminaux mobiles il est connu l'existence d'accessoires avec lesquels on peut entrer en relation avec un terminal mobile ou au moins avec lesquels on peut recevoir des informations en provenance de ce terminal mobile. Les transmissions entre le terminal mobile et l'accessoire peuvent être acoustiques ou par infrarouge. Dans ce cas elles demandent pour pouvoir s'exercer des émetteurs et récepteurs spécifiques disposés dans le terminal mobile et l'accessoire. Il est également connu que cette transmission soit radioélectrique. Le mode de transmission est par exemple calé sur une fréquence de type domestique (27 MHz) ou autre. Avec un protocole adapté il est ainsi possible de solliciter et d'entrer en communication avec n'importe quel accessoire. Cependant dans ces derniers cas il est nécessaire de disposer dans le terminal mobile et dans l'accessoire des circuits supplémentaires, coûteux, pour mener à bien de telles communications.

Il existe par ailleurs un mode de transmission qui pourrait paraître naturel: le système d'émission réception radioélectrique avec lequel le terminal mobile échange avec une station de base d'un réseau public auquel il peut se connecter. Cependant l'utilisation d'un tel système présente deux problèmes. Premièrement, il importe de ne pas brouiller ce réseau public avec des émissions parasites. Deuxièmement, et surtout, le protocole de communication entre un terminal mobile et une station de base utilise des codages spécifiques, notamment des codages de type GMSK pour Gaussian Minimum Shift Keying qui signifie agilité de décalage en fréquence du type à minimum gaussien. De tels codages nécessitent à la réception un décodeur du même type pour recevoir et interpréter des signaux transmis par un modulateur d'émission du terminal mobile. Ceci rend le dispositif de réception de l'accessoire excessivement onéreux, un tel décodage demandant des moyens de traitement de signal très complexes.
La demande de brevet EP 0 830 044 présente un tel système et se propose de résoudre le premier problème, c'est-à-dire celui des interférences avec les signaux du réseau public. Toutefois, cette solution ne parvient pas à résoudre le second problème, et présente par conséquent l'inconvénient d'un système complexe.
Le brevet US5404391 décrit un téléphone mobile avec accessoire simple, qui utilise pour la communication avec le téléphone mobile une modulation en sinusoïde pure, mais qui requiert un modulateur spécifique pour la communication avec une station base et un autre modulateur pour la communication avec l'accessoire.
Dans l'invention, pour résoudre ce problème de communication, on a voulu communiquer avec un accessoire sans toutefois avoir ni à installer un circuit spécifique dans l'accessoire en réception pour recevoir des signaux modulés selon un codage de type GMSK, ni avoir à installer dans le terminal mobile un circuit parallèle permettant d'éliminer les fonctions du codeur GMSK. Dans l'invention, au contraire on utilisera le codeur de type GMSK.

Cependant pour en éviter des effets de complication sur le signal transmis, on s'arrange alors pour alimenter le codeur GMSK avec des suites de bits dont la traduction, après codage et modulation, s'exprime sous la forme d'une modulation par une sinusoïde pure d'une fréquence porteuse à moduler.

On montrera dans l'invention qu'on est alors capable de produire plusieurs trains de bits spécifiques conduisant à plusieurs modulations par des sinusoïdes pures de la fréquence porteuse. En alternant de tels trains de bits spécifiques, on peut provoquer l'envoi de signaux codés. Avec ces signaux codés, dans l'accessoire, il suffit juste de réaliser un récepteur simple susceptible de détecter la présence d'une sinusoïde pure et, le cas échéant de mesurer la fréquence du signal de modulation. On montrera d'une part que l'équipement pour réaliser une telle réception est des plus rustique, il est très peu coûteux. D'autre part, en agissant ainsi on est capable de solliciter un accessoire parmi plusieurs et donc de transmettre efficacement des informations à un débit qui n'est pas négligeable puisqu'il peut être de l'ordre de ou supérieur à 10 Kbits.

L'invention a donc pour objet un procédé de communication entre un terminal mobile et un accessoire de ce terminal mobile, le terminal mobile pouvant échanger des premières informations avec une station de base en modulant une première porteuse située dans une gamme de fréquence normalisée par des signaux représentatifs des premières informations, avec un modulateur d'émission, et le terminal mobile pouvant de surcroît transmettre des deuxièmes informations à l'accessoire. Ce procédé se caractérise en ce que, pour les transmissions des deuxièmes informations à l'accessoire,
- le modulateur d'émission du terminal mobile module une deuxième porteuse située dans la gamme de fréquence normalisée,
- les deuxièmes informations sont transmises par une modulation en sinusoïde pure du signal de la deuxième porteuse.

L'invention a aussi pour objet un terminal mobile permettant de mettre en oeuvre ce terminal, soit un terminal mobile comportant :
- des premiers moyens pour l'échange de premières informations avec une station de base en coopération avec un modulateur d'émission modulant une première porteuse située dans une gamme de fréquence normalisée par des signaux représentatifs des premières informations, et
- des deuxièmes moyens pour transmettre des deuxièmes informations à un accessoire (2),
Ce terminal se caractérise en ce que les deuxièmes moyens sont aptes à transmettre ces deuxièmes informations en coopération avec le modulateur d'émission, en modulant une deuxième porteuse située dans la gamme de fréquence normalisée, par des sinusoïdes pures.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'un terminal mobile, d'une station de base et d'un accessoire utilisé pour mettre en oeuvre le procédé de l'invention ;
- Figure 2 : une représentation temporelle de signaux échangés entre le terminal mobile et la station de base d'une part, et le terminal mobile et l'accessoire d'autre part dans une application de type GSM-TDMA (Time Division Multiple Access, accès multiple à répartition dans le temps) ;
- Figure 3 : une représentation d'un modulateur classique d'un terminal mobile avec un perfectionnement de l'invention ;
- Figure 4 : une représentation d'un démodulateur à mettre en oeuvre dans l'accessoire ;
- Figure 5 : des représentations de trains de bits spécifiques à l'invention utilisés pour exciter un codeur GMSK.

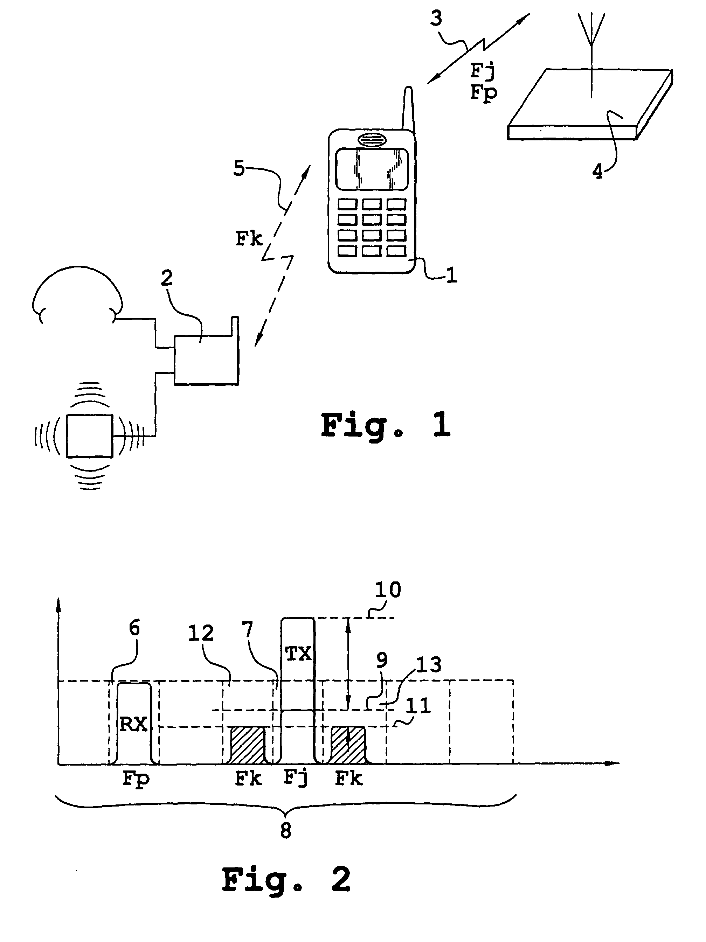

La figure 1 montre un terminal mobile 1 utilisable pour mettre en oeuvre le procédé de communication de l'invention quand il entre en relation avec un accessoire 2.
L'accessoire 2 comporte par exemple un microphone-casque et/ou un vibreur d'alerte d'appel.
Il peut être prévu que le terminal mobile 1 ne comporte que les moyens de base, notamment ceux nécessaires à la télécommunication, et que les autres moyens normalement mis en place dans un terminal mobile soient déportés sur un ou plusieurs accessoires. Ainsi, les microphone et haut-parleur peuvent n'être présent que sur l'accessoire 2 et non sur le terminal mobile 1.

D'une manière connue, le terminal mobile 1 échange des informations, par voie hertzienne 3, avec une station de base 4 d'un réseau public ou privé de téléphonie mobile. L'échange de ces informations est effectué en modulant, au moyen d'un modulateur d'émission contenu dans le terminal mobile 1, une porteuse Fj située dans une gamme de fréquence normalisée. On connaît ainsi les gammes de fréquence utiles des différentes normes, GSM (gamme utile comprise entre 880 MHz et 960 MHz), DCS (gamme utile comprise entre 1710 MHz et 1880 MHz), PCS (gamme utile comprise entre 1850 MHz et 1990 MHz) et UMTS dont la fréquence est de l'ordre de 2200 MHz. La gamme normalisée comporte la gamme utile plus des débordements en bords de gamme utile. L'idée de l'invention est, de ce point de vue, que si une émission 3 se produit dans une de ces gammes normalisées de relation entre le terminal mobile 1 et la station de base 4, la fréquence d'une liaison hertzienne 5 utilisée par le terminal mobile pour communiquer avec l'accessoire 2 sera située dans la même gamme normalisée de fréquence. De cette façon on évitera, par des émissions non prévues à l'origine, de faire du bruit dans des gammes normalisées réservées à d'autres communications. En outre, en choisissant ces gammes de fréquence, bien entendu tout le terminal mobile sera maintenu tel quel. Il n'y aura rien à y changer. Ce qui conduit également à la réduction du prix de l'ensemble terminal-accessoire.

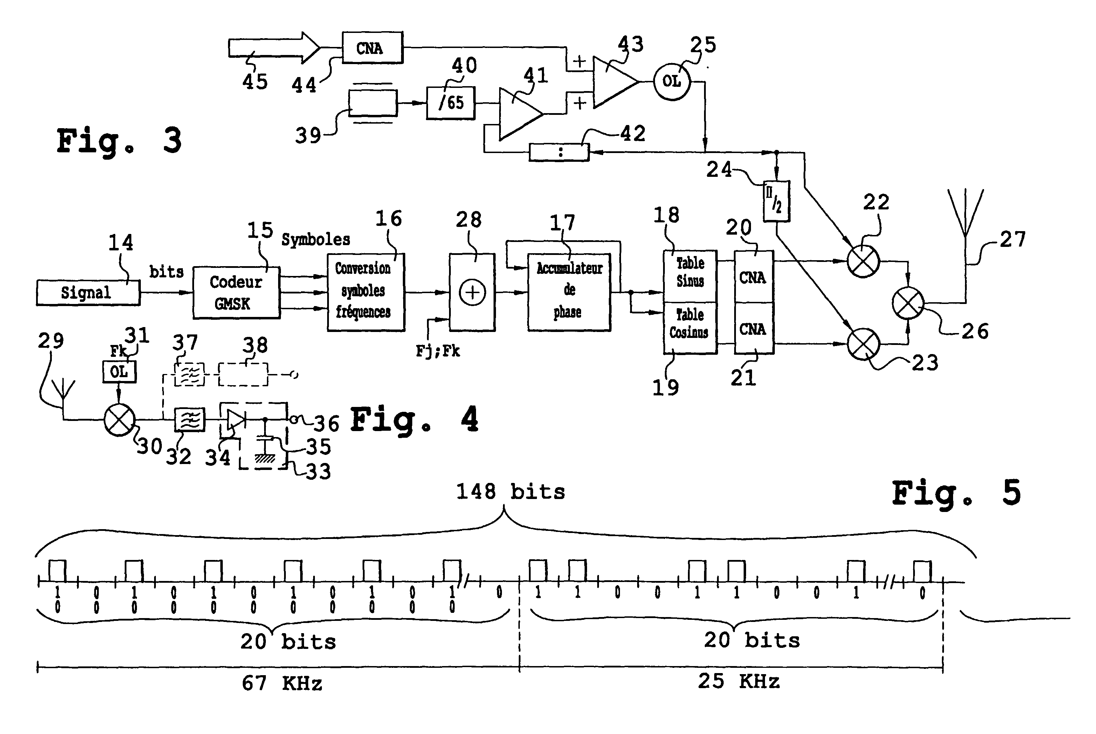

La figure 2 montre, dans le cadre d'une application de type GSM-TDMA, un mode d'échange d'un terminal mobile avec une station de base d'une part et avec l'accessoire 2 d'autre part. Sur le diagramme temporel montré, le terminal mobile reçoit pendant une fenêtre temporelle 6 des signaux RX émis sur une porteuse Fp par la station de base 4. D'une manière connue, au cours d'une fenêtre temporelle 7, ultérieure ou antérieure dans une même trame 8, le terminal mobile est sensé envoyer des signaux TX à la station de base 4. Les signaux RX et TX sont des signaux de parole, ou des données numériques.

Le niveau en puissance des signaux que le terminal mobile 1 est susceptible d'envoyer à la station de base 4 peut varier. Ce niveau dépend de l'éloignement du terminal mobile de la station de base 4. Ce niveau est compris entre un niveau minimal 9 et un niveau maximal 10. D'une manière connue, la fréquence porteuse de l'émission du terminal mobile en réponse sera Fj, évoluant temporellement selon un plan de fréquence préétabli. Les fréquences Fp et Fj sont comprises dans la gamme normalisée. Cependant la gamme normalisée, selon les normes, est séparée en deux bandes : une première bande sert pour les émissions de la station de base à destination du terminal mobile, et une deuxième bande sert pour les émissions du terminal mobile à destination de la station de base. De manière à ne pas perturber d'autres terminaux mobiles qui seraient situés à proximité du terminal mobile 1, dans sa relation hertzienne 5 avec son accessoire 2, le terminal mobile 1 utilisera une fréquence porteuse Fk située dans la bande attribuée aux émissions du terminal mobile 1 à destination de la station de base 4 : la gamme de la fréquence Fj.

En outre, de préférence, le niveau d'émission 11 du terminal mobile dans sa relation 5 avec l'accessoire 2 sera inférieur au niveau minimal 9. Ceci permettra d'éviter que la station de base 4 ne soit sollicitée par des signaux destinés à l'accessoire 2. Au moment de l'appel du terminal mobile 1 par la station de base 4, celui-ci peut, pendant la fenêtre temporelle 7 elle-même, émettre un signal à la fréquence Fk à destination de l'accessoire 2. En effet au moment de l'appel, la fenêtre 7 n'est pas utilisée par le terminal mobile 1 pour communiquer avec la station de base 4. Ou bien si elle l'est, elle l'est avec la fréquence attendue Fj différente de Fk. Éventuellement, si le modulateur d'émission du terminal mobile est multi-porteuse il pourra à la fois converser avec la station de base 4 pendant la fenêtre 7, sur la fréquence porteuse Fj alors qu'il conversera avec l'accessoire 2 sur la fréquence porteuse Fk. Dans ces cas, Fk sera différente de Fj.

Il est tout à fait possible, cependant, que les émissions 5 à destination de l'accessoire 2 se situent pendant des fenêtres temporelles 12 et 13 différentes de la fenêtre temporelle 6 et de la fenêtre temporelle 7. Il est également possible bien entendu que plus d'une fenêtre temporelle pendant une trame 8 de huit fenêtres soit utilisée par le terminal mobile 1 pour converser avec l'accessoire 2. Ainsi sur une trame de huit fenêtres, jusqu'à six fenêtres, hormis la fenêtre de réception 6 et la fenêtre d'émission 7, peuvent être utilisées pour converser avec l'accessoire 2.

On notera que dans l'invention, l'organisation en fenêtres temporelles sera naturellement mise en oeuvre, sans difficulté particulière, du seul fait que le terminal mobile est déjà muni d'une part d'organes permettant le fonctionnement pendant des fenêtres temporelles et d'autre part d'un programme dans son système d'exploitation permettant le fonctionnement pendant des fenêtres sélectionnées. Tout simplement, dans le cas de la conversation avec l'accessoire 2, le programme sera modifié pour qu'une, deux ou six fenêtres puissent être utilisées dans le cadre de la liaison avec l'accessoire 2. On voit bien qu'en agissant ainsi, rien ne change dans le terminal mobile, si ce n'est le contenu du programme. Ce contenu supplémentaire du programme peut être enregistré une fois pour toutes. Il ne provoque une occupation en mémoire supplémentaire que minimum, et entre très facilement dans la place encore disponible en mémoire programme d'un terminal mobile.

La figure 3 montre en résumé, ce qui se fait de mieux actuellement dans le domaine des modulateurs de terminal mobile, notamment des modulateurs multi-porteuses. Un signal à émettre, ayant préalablement subi des codages de compression, de redondance, de canal ou autres, est disponible sous une forme numérique en sortie d'un générateur 14. Il va être synthétisé spectralement. Un codeur 15, notamment de type GMSK, reçoit les bits du signal à émettre et, en fonction de bits précédents du même signal (dans un exemple simplifié, on prendra 2 temps bits précédents), produit des signaux codés, des symboles, résultant d'une linéarisation de la modulation sur une période de temps donnée (dans l'exemple de 3 bits). Le codage pourrait être différent d'un codage GMSK. De toute façon, un codage équivalent serait mis en oeuvre conduisant à des signaux de sortie du modulateur difficilement interprétables. Dans l'invention, on enseigne de rechercher les trains de bits du générateur 14 dont le codage par le codeur 15 entraîne une modulation par un signal sinusoïdal pur de la porteuse d'émission. Dans un exemple selon la norme GSM, les bits de signal sont délivrés par le générateur 14 à une fréquence de 13/48 MHz (égal sensiblement à 270 KHz). Le codeur 15 délivre les symboles à ce même rythme. Une table 16 de conversion délivre ensuite des échantillons de fréquence instantanée correspondant aux symboles produits par le codeur 15.

Un accumulateur de phases 17 connecté à la table de conversion 16, reçoit ainsi un signal proportionnel à la fréquence. L'accumulateur 17 additionne un échantillon reçu à son propre contenu, et réinjecte le tout sur une de ses deux entrées. L'accumulateur 17 produit donc une phase instantanée évoluant régulièrement. Plutôt que de ne disposer à la sortie de l'accumulateur de phases, d'une phase instantanée qu'au rythme de la production des bits du signal, on préfère suréchantillonner la sortie de l'accumulateur de phase en le faisant travailler à une vitesse notablement plus rapide, par exemple de 8 à 32 fois sa vitesse. Dans un exemple, le taux de suréchantillonnage sera de 16. Ce qui signifie que la table de conversion des symboles en valeur de fréquence et l'accumulateur de phases sont sollicités à un rythme de 16x13/48=13/3 MHz par exemple. La valeur de fréquence instantanée est normalisée pour correspondre à un écart de phase qui se produirait pendant une période de suréchantillonnage.

Bénéficiant ainsi d'une phase instantanée, il est possible, au moyen de tables 18 et 19 de transformation sinus et cosinus, de produire des signaux correspondant aux amplitudes instantanées d'un signal modulant. Il suffit ensuite de transformer ces signaux d'amplitude instantanée par des convertisseurs numériques analogiques 20 et 21 (CNA) et de les injecter dans des mélangeurs 22 et 23 pour produire le signal à émettre. Les mélangeurs reçoivent en quadrature par un déphaseur 24 un signal de porteuse d'un oscillateur local 25. Les signaux produits par les mélangeurs 22 et 23 sont ensuite mélangés dans un troisième mélangeur 26 jouant par ailleurs un rôle d'amplificateur. L'amplificateur est relié à un aérien 27 pour émettre le signal.

Pour obtenir une porteuse Fj programmable depuis un signal à une fréquence autour de zéro, il est nécessaire de provoquer un saut de fréquence par un additionneur 28. Il est connu d'intercaler cet additionneur 28 entre la table de conversion 16 et l'accumulateur de phases 17, pour superposer à chaque période d'échantillonnage, la fréquence de la porteuse programmée Fj à la fréquence de modulation instantanée. Pour effectuer cette addition, bien entendu, le taux de suréchantillonnage doit être plus grand que la fréquence maximum synthétisée de manière à éviter des repliements de spectres. Dans un exemple, la fréquence maximum synthétisée est 26 MHz. Cette fréquence maximum correspond à 64 bandes de 200 KHz (soit 12,8 MHz) multiplié par deux pour satisfaire au critère de Nyquist. On choisit dans ce cas un taux de suréchantillonnage de 4, menant à une fréquence de suréchantillonnage de 104 MHz.

En agissant ainsi, on peut émettre, avec l'aérien 27, des signaux à destination de la station de base 4. On peut néanmoins aussi émettre des signaux à destination de l'accessoire 2. Dans ce cas un signal représentatif de la fréquence Fk est admis en entrée de l'additionneur 28. Selon l'invention, le signal disponible sur l'aérien 27 sera une modulation par une sinusoïde pure, ou ayant au moins une forte composante spectrale de modulation par une sinusoïde pure. Dans ces conditions, figure 4, il suffit de placer dans l'accessoire 2 un récepteur très simple. Celui-ci comportera naturellement un aérien 29 en relation avec un mélangeur 30 qui reçoit un signal en provenance d'un oscillateur local 31. L'oscillateur local 31 sera un oscillateur calé à une fréquence Fk, correspondant à une fréquence prédéterminée d'émission des signaux à destination de l'accessoire 2. En sortie du mélangeur 3 sera disposé un filtre passe-bas 32. La fréquence de coupure du filtre 32 sera déterminée de façon à ce que ce filtre puisse servir à un circuit 33 de détection d'enveloppe. Le circuit 33 comportera par exemple d'une manière simple une diode en série 34 et un condensateur en parallèle 35. Le circuit 33 est un circuit redresseur délivrant à sa sortie 36 un état un ou zéro selon que le filtre 32 aura laisser passer ou n'aura pas laisser passer des produits de démodulation issus du mélangeur 30.

La figure 5 montre comment produire des signaux de modulation par une sinusoïde pure d'une fréquence porteuse dans le modulateur de la figure 3. Dans un exemple, le générateur 14 produit une succession alternée de uns et de zéros ou bien une succession de zéros. Dans ce cas, on peut montrer qu'à la sortie du mélangeur 26 on dispose d'une fréquence porteuse Fk modulée par une sinusoïde pure à 67 KHz. Autrement, si le générateur 14 produit des successions alternées de couples de un et de couples de zéro, la fréquence Fk sera modulée par une fréquence pure de 25 KHz. Dans le premier cas, selon qu'on aura fait débiter par le générateur 14 une suite alternée de uns ou de zéros ou bien uniquement de zéros, le signal disponible à la sortie du mélangeur 26 sera un signal à +67,7 KHz ou à -67,7 KHz. Dans la pratique l'inversion de phases qui en résulte dépend également de l'état du codeur de phases 15 au moment où il reçoit les signaux du générateur 14. Si on adopte un détecteur d'enveloppe comme circuit de réception dans l'accessoire 2, la distinction entre +67,7 KHz et -67,7 KHz peut n'avoir que peu d'intérêt. En choisissant un récepteur différent on peut utiliser cette différence. Notamment, il suffit d'avoir un oscillateur local 31 produisant un signal à Fk - 67,7 KHz. Dans ce cas le signal démodulé en bande de base oscille soit à 135,4 KHz soit à 0,4 MHz en fonction du signal émis. On peut également le discriminer par un détecteur d'enveloppe et un filtre adapté.

Dans le cadre de l'exemple GSM-TDMA, dans une fenêtre temporelle de 577 microsecondes comportant 156 bits, la durée d'un bit-symbole est de l'ordre de 3,7 microsecondes. Compte tenu de la présence du filtre 32, notamment lorsque le signal modulant par une sinusoïde pure est un signal à 25 KHz, il faudra alors émettre la porteuse modulée pendant au moins 40 microsecondes pour que le filtre 32 reçoive une alternance complète du signal à 25 KHz. Par mesure de précaution, on préférera une durée plus longue, de l'ordre de 70 à 80 microsecondes. En pratique, on choisira ainsi de constituer avec le générateur 14 des blocs de 20 symboles de ce générateur dont la traduction en terme de modulation sur le signal émis par l'aérien 27 sera une modulation par un signal évoluant selon une sinusoïde pure.

Dans la pratique, au cours d'une fenêtre temporelle on ne pourra ainsi transmettre que sept blocs de 20 symboles donc sept bits d'information utile. On peut choisir des durées d'émission plus courtes, et notamment un nombre de symboles du codeur 15 inférieur à 20, pour augmenter le débit de transmission du canal ainsi constitué. Dans ce cas cependant la réception peut être de moins bonne qualité. Au contraire, on peut privilégier la qualité au détriment du débit. Dans ce cas les blocs de symboles comporteront plus que 20 symboles.

Pour pouvoir recevoir des signaux à 25 KHz ou à 67 KHz, donc avec deux fréquences distinctes, il est possible de doubler le filtre 32 et le détecteur d'enveloppe 33 en un filtre 37 et un détecteur d'enveloppe 38. Dans ce cas, un des deux filtres 32 et 37 est prévu pour couper les fréquences situées en position intermédiaire entre les deux fréquences de modulation en sinusoïde pure retenue. Par exemple, le filtre passe-bas 32 aura une fréquence de coupure de 45 KHz alors que le filtre passe-bas 37 aura une fréquence de coupure inférieure à 15 KHz. Ce filtre 32 laissera alors passer les signaux à 25 KHz mais bloquera les signaux à 67 KHz. Au besoin on peut prévoir des filtres passe-haut au lieu de filtres passe-bas. On peut également prévoir un redressement double alternance au lieu d'un redressement mono-alternance (ce qui permet d'augmenter le débit du canal) ou encore une multiplication des filtres 32, 37 et autres et prévoir d'envoyer plusieurs sinusoïdes pures différentes.

Il est également envisageable dans ce dernier cas, compte tenu d'un seuil de détection à fixer pour la mesure de signaux en sortie de détecteurs tels que 33 et 38, de prévoir d'envoyer un signal complexe par le codeur 14. Ce signal complexe est tel que plusieurs détecteurs tels que 33 et 38 puissent être sollicités en même temps, mais pas d'autres. En schématisant, on pourrait prévoir que le signal modulant la porteuse Fk soit ou ne soit pas un signal à une fréquence combinée de 25 KHz et de 67 KHz.

Il reste dans tous les cas qu'on utilisera le codeur 15 de type GMSK, dont les explications relatives à la figure 3 montrent qu'il est difficile à éliminer dans la chaîne d'émission. En réception, un simple jeu de filtres tels 32 et 37 permettra toujours à l'accessoire 2 de recevoir les informations qui lui sont destinées.
En agissant ainsi, en transmettant 7 bits pendant 577 microsecondes, on obtient un débit de l'ordre de 10 Kbits/s. Si plusieurs fenêtres d'une même trame sont utilisées, le débit peut être bien plus grand.

Il est possible d'obtenir une variation de la modulation du signal disponible en sortie du modulateur 26 autrement qu'en modifiant, d'un bloc de symboles à l'autre, les signaux débités par le générateur de signaux 14 et/ou le codeur 15. Dans ce cas, on préfèrera alimenter le codeur 15 toujours avec une même séquence, une de celles indiquées ci-dessus, ou une autre, qui aurait pour résultat de faire émettre par l'aérien 27 une porteuse modulée par un seul signal à une fréquence sinusoïdale pure. Dans ce cas, pour transmettre des informations, on modifiera légèrement l'oscillateur local 25 pour qu'il fonctionne de la manière suivante.

L'oscillateur 25 pourrait être ainsi un oscillateur à fréquence intermédiaire (de l'ordre de 100 MHz) ou un oscillateur à une fréquence de transition (égale à la fréquence d'émission Fj plus ou moins la fréquence intermédiaire). Un tel oscillateur local 25 est normalement stabilisé à partir d'un quartz de la façon suivante. Un circuit à quartz 39 produit un signal à 13 MHz. Un diviseur 40 situé en sortie du diviseur 39 divise ce signal par 65 pour produire un signal à 200 KHz. La fréquence de 200 KHz est typiquement la largeur de modulation d'une fréquence Fj (ou Fk) d'émission par le terminal mobile. Elle est aussi l'écart qui sépare deux fréquences porteuses Fj et Fj' connexes. Le signal délivré par le diviseur 40 est ensuite introduit dans un comparateur 41 qui commande en tension l'oscillateur 25. Un diviseur 42 prélève le signal à la sortie de l'oscillateur local 25, le divise par un coefficient choisi, et le réinjecte sur une autre entrée du comparateur 41. Un tel circuit de contre-réaction a pour effet que le signal délivré par l'oscillateur 25 est un multiple, par le coefficient choisi du diviseur 41, de la largeur de bande (200 KHz) de la boucle de contre-réaction. Lorsqu'un tel système est réglé, et lorsque le générateur du signal 14 produit des trains de bits comme ceux indiqués à la figure 5, la modulation de la porteuse Fk est constante.

Une telle modulation constante, bien entendu, ne transmet qu'une information imparfaite liée seulement à son existence ou à son absence. Si on s'en tenait là, il se produirait le résultat suivant que dès qu'un terminal mobile voudrait interpeller un accessoire qui lui est propre, d'autres accessoires proches, attachés à d'autres terminaux mobiles, fabriqués de la même manière, seraient également sollicités. Une telle information binaire n'est donc pas suffisante.

Dans l'invention on prévoit, plutôt que de changer dans ce cas les trains de symboles du générateur 14, de moduler la commande en tension de l'oscillateur local 25. En pratique, ceci peut revenir à disposer un circuit additionneur 43 entre la sortie du comparateur 41 et l'entrée de commande de l'oscillateur 25 d'une part et entre l'oscillateur 25 et un convertisseur numérique analogique 44. Le convertisseur 44 délivre une tension correspondant à un signal de commande qui lui est transmis par un bus 45. Le bus 45 est en relation avec un système à microprocesseur du terminal mobile. Ce système à microprocesseur est apte à placer sur le bus 45 à destination du convertisseur 44 un état binaire parmi n. Cet état binaire engendre une addition, dans la chaîne de régulation de l'oscillateur 25 d'une tension d'erreur apte à décaler le réglage de l'oscillateur local 25.

Dans la pratique, on dispose dans tout terminal mobile d'une chaîne de régulation comportant le comparateur 41, l'oscillateur local 25 et le diviseur 42. Dans certains montages tout numérique, il peut même être possible de se passer de l'additionneur 43 et du convertisseur 44. En effet, le diviseur 40 et/ou le diviseur 42 peuvent être conçus sous la forme de compteurs-décompteurs par 65 (ou autres). On peut alors utiliser l'état binaire disponible sur le bus 45 pour prérégler, avant comptage décomptage, le compteur 40 et/ou le décompteur 42. On les prérègle dans un état de comptage différent de zéro. Dans ce cas, le signal disponible en sortie de l'oscillateur 25 sera décalé en fréquence. Ce décalage en fréquence est équivalent, à peu près, à une modulation en fréquence de la porteuse. En tous cas, il peut être reçu très simplement dans le circuit de la figure 4.

En agissant ainsi, on s'assure que la fréquence de modulation disponible en émission est une fréquence choisie, par exemple 67 KHz, modulée elle-même par les états binaires délivrés par le bus 45. Soit ces états binaires sont zéro auquel cas le signal reçu dans le récepteur 29-38 est un signal à une fréquence unique de 67 KHz. Soit ces états binaires sont différents de zéro et évoluent dans le temps. L'oscillateur 25 est alors altéré en fonctionnement et le signal résultant de la modulation à 67 KHz est décalé vers une ou plusieurs autres valeurs. On peut détecter ces autres signaux avec d'autres filtres comme expliqué ci-dessus. Soit le décalage est tel que le signal émis sort complètement de la bande de réception. Auquel cas, il y a absence de signal à 67 KHz. Dans ce cas la modulation est de type tout ou rien.

Autant dans le cas précédent il fallait 20 symboles au codeur 15 pour qu'au moment de la réception on puisse détecter un signal à 25 KHz, autant une durée correspondant à 10 symboles sera suffisante dans le cas où la fréquence modulante est 67 KHz. Dans ce cas, le débit peut même aller jusqu'à 16 bits pendant une fenêtre temporelle 12, 7 ou 13 de 577 microsecondes. Avec une telle répartition, le système à microprocesseur du terminal mobile 1 doit mettre des états binaires sur le bus 45 avec une cadence de seize états par fenêtre temporelle. On remarquera qu'avec cette dernière solution le débit est plus élevé sans avoir besoin d'une autre chaîne 37, 38 de détecteur d'enveloppe.

Plutôt que d'utiliser une fréquence Fk située dans la bande utile de la gamme normalisée, on peut préférer se situer légèrement au-delà ou en deçà, ou à la rigueur entre deux bandes utiles de cette gamme normalisée. Par exemple dans le cadre du GSM pour lequel la bande utile est 880-960 MHz, on pourra prévoir que la fréquence Fk sera 870 MHz, voire jusqu'à 850 MHz. Dans ce cas la fréquence porteuse Fk est choisie à une fréquence située dans la gamme normalisée, hors de la bande utile, mais à moins de 5 % du bord de la bande utile.

Pour la détermination de la fréquence Fk utilisable avec l'oscillateur local 31, on peut prévoir d'apparier l'accessoire 2 avec le terminal mobile en usine. On munit donc l'accessoire 2 d'un oscillateur local 31. L'oscillateur local 31 n'a pas besoin d'être réglable. Il suffit de mesurer quelle fréquence, dans la gamme d'émission normalisée retenue, il est susceptible de produire. Dans ces conditions avec le terminal mobile 1, compte tenu que ce dernier a une possibilité d'exploration importante de toute la gamme d'émission qu'il est susceptible de devoir assurer, on peut choisir celle des fréquences Fj de ce terminal mobile qui, modulée par un signal à une fréquence pure comme dit ci-dessus peut conduire les filtres 32 et 37 à discriminer la présence d'un signal à cette fréquence pure. Autrement dit, on mesure la fréquence Fk naturelle de l'oscillateur 31, et on choisit cette fréquence Fk comme fréquence d'échange. Dans ce cas, l'additionneur 28 reçoit du système à microprocesseur du terminal mobile des signaux correspondant à Fk lorsqu'il a communiquer avec l'accessoire.

## Revendications

1. Procédé de communication entre un terminal mobile (1) et un accessoire (2) de ce terminal mobile, ledit terminal mobile pouvant échanger (3) des premières informations avec une station de base (4) en modulant une première porteuse (Fj) située dans une gamme de fréquence normalisée par des signaux représentatifs desdites premières informations, avec un modulateur (14-28) d'émission, et ledit terminal mobile pouvant de surcroît transmettre (5) des deuxièmes informations audit accessoire, et pour les transmissions desdites deuxièmes informations audit accessoire,
- ledit modulateur d'émission dudit terminal mobile module une deuxième porteuse (Fk) située dans la gamme de fréquence normalisée,
- lesdites deuxièmes informations sont transmises par une modulation en sinusoïde pure du signal de ladite deuxième porteuse.

2. Procédé selon la revendication 1, **caractérisé en ce que** le modulateur d'émission met en oeuvre une modulation de type GMSK (15).

3. Procédé selon l'une des revendications 1 à 2, **caractérisé en ce que** ladite deuxième porteuse a une fréquence égale à celle de ladite première porteuse.

4. Procédé selon l'une des revendications 1 à 3, **caractérisé en ce que** ledit accessoire est un vibreur.

5. Procédé selon l'une des revendications 1 à 3, **caractérisé en ce que** ledit accessoire est de type microphone casque.

6. Procédé selon l'une des revendications 1 à 5, **caractérisé en ce que**
- lesdites deuxièmes informations sont transmises par deux modulations en sinusoïde pure du signal de la deuxième porteuse.

7. Procédé selon l'une des revendications 1 à 6, **caractérisé en ce que**
- on reçoit lesdites deuxièmes informations dans ledit accessoire en filtrant par un filtre passe-bas (32) les signaux transmis après leur démodulation, et en soumettant le signal filtré à une détection (33) d'enveloppe.

8. Procédé selon l'une des revendications 1 à 7, **caractérisé en ce que**
- on accorde en usine une fréquence centrale (Fk) d'un oscillateur local (31) dudit accessoire avec une des fréquences possibles dans ledit terminal mobile pour la première porteuse (Fj).

9. Procédé selon l'une des revendications 1 à 8, **caractérisé en ce que**
- on choisit comme fréquence de ladite deuxième porteuse une fréquence située dans la gamme normalisée, hors d'une bande utile, et à moins de cinq pour-cent hors de la bande utile.

10. Procédé selon l'une des revendications 1 à 9, **caractérisé en ce que**
- pour moduler, on décale la fréquence d'un oscillateur local (25) par réglage (43-45) de son circuit (41-42) de régulation par contre-réaction.

11. Terminal mobile (1) comportant
- des premiers moyens pour l'échange (3) de premières informations avec une station de base (4) en coopération avec un modulateur (14-28) d'émission modulant une première porteuse (Fj) située dans une gamme de fréquence normalisée par des signaux représentatifs desdites premières informations, et
- des deuxièmes moyens pour transmettre des deuxièmes informations à un accessoire (2),
et lesdites deuxièmes moyens sont aptes à transmettre lesdites deuxièmes informations en coopération avec ledit modulateur d'émission, en modulant une deuxième porteuse (Fk) située dans la gamme de fréquence normalisée, par des sinusoïdes pures.

12. Terminal mobile selon la revendication précédente, **caractérisé en ce que** ledit modulateur d'émission est à apte à mettre en oeuvre une modulation de type GMSK.

13. Terminal mobile selon l'une des revendications 11 et 12, **caractérisé en ce que** ladite première porteuse a une fréquence égale à ladite deuxième porteuse.

14. Terminal mobile selon l'une des revendications 11 à 13, **caractérisé en ce que** lesdits deuxièmes moyens sont aptes à transmettre lesdites deuxièmes informations à un vibreur.

15. Terminal mobile selon l'une des revendications 11 à 13, **caractérisé en ce que** lesdits deuxièmes moyens sont aptes à transmettre lesdites deuxièmes informations à un microphone casque.

16. Terminal mobile selon l'une des revendications 11 à 13, **caractérisé en ce que** lesdits deuxièmes moyens sont aptes à transmettre lesdites deuxièmes informations à un vibreur.

17. Terminal mobile selon l'une des revendications 11 à 16, **caractérisé en ce que** lesdits deuxièmes moyens sont aptes à effectuer deux modulations en sinusoïde pure de ladite deuxième porteuse.

18. Terminal mobile selon l'une des revendications 11 à 17, **caractérisé en ce que** lesdites deuxièmes moyens sont prévus pour fonctionner avec une fréquence de ladite deuxième fréquence, située dans la gamme normalisée, hors d'une bande utile, et à moins de cinq pour-cent hors de la bande utile.

## Patentansprüche

1. Verfahren zur Kommunikation zwischen einem mobilen Endgerät (1) und einem Zubehör (2) dieses mobilen Endgeräts, wobei das mobile Endgerät in der Lage ist, erste Informationen mit einer Basisstation (4) durch Modulieren eines ersten Trägers (Fj), der sich in einem normierten Frequenzbereich befindet, mit für die ersten Informationen repräsentativen Signalen mit einem Sendemodulator (14-28) auszutauschen (3), und das mobile Endgerät außerdem in der Lage ist, zweite Informationen an das Zubehör zu übertragen (5), wobei für die Übertragungen der zweiten Informationen zu dem Zubehör
- der Sendemodulator des mobilen Endgeräts einen zweiten in dem normierten Frequenzbereich liegenden Träger (Fk) moduliert,
- die zweiten Informationen durch eine reine Sinusmodulation des Signals des zweiten Trägers übertragen werden.

2. Verfahren nach Anspruch 1, **dadurch gekennzeichnet, dass** der Sendemodulator eine Modulation vom Typus GMSK verwendet (15).

3. Verfahren nach einem der Ansprüche 1 bis 2, **dadurch gekennzeichnet, dass** der zweite Träger eine Frequenz gleich derjenigen des ersten Trägers hat.

4. Verfahren nach einem der Ansprüche 1 bis 3, **dadurch gekennzeichnet, dass** das Zubehör ein Schwinger ist.

5. Verfahren nach einem der Ansprüche 1 bis 3, **dadurch gekennzeichnet, dass** das Zubehör vom Typ Kopfhörermikrofon ist.

6. Verfahren nach einem der Ansprüche 1 bis 5, **dadurch gekennzeichnet, dass**
- die zweiten Informationen durch zwei reine Sinusmodulationen des Signals des zweiten Trägers übertragen werden.

7. Verfahren nach einem der Ansprüche 1 bis 6, **dadurch gekennzeichnet, dass**
- die zweiten Informationen in dem Zubehör empfangen werden, indem die übertragenen Signale nach ihrer Demodulation durch ein Tiefpassfilter (32) gefiltert werden und das gefilterte Signal einer Hüllkurvenerfassung (33) unterzogen wird.

8. Verfahren nach einem der Ansprüche 1 bis 7, **dadurch gekennzeichnet, dass**
- im Werk eine Mittenfrequenz (Fk) eines Lokaloszillators (31) des Zubehörs auf eine der in dem mobilen Endgerät für den ersten Träger (Fj) möglichen Frequenzen abgestimmt wird.

9. Verfahren nach einem der Ansprüche 1 bis 8, **dadurch gekennzeichnet, dass**
- als Frequenz des zweiten Trägers eine in dem normierten Frequenzbereich außerhalb eines Nutzbandes und weniger als 5% außerhalb des Nutzbandes liegende Frequenz gewählt wird.

10. Verfahren nach einem der Ansprüche 1 bis 9, **dadurch gekennzeichnet, dass**
- zum Modulieren die Frequenz eines Lokaloszillators (25) durch Regelung (43-45) seines Gegenkopplungs-Regelkreises (41 - 42) verschoben wird.

11. Mobiles Endgerät (1) mit:
- ersten Mitteln für den Austausch (3) von ersten Informationen mit einer Basisstation (4) in Zusammenwirkung mit einem Sendemodulator (14 - 28), der einen in einem normierten Frequenzbereich liegenden ersten Träger (Fj) mit für die ersten Informationen repräsentativen Signalen moduliert, und
- zweiten Mitteln zum Übertragen der zweiten Informationen zu einem Zubehör (2), wobei die zweiten Mittel in der Lage sind, die zweiten Informationen in Zusammenwirkung mit dem Sendemodulator durch Modulieren eines in dem normierten Frequenzbereich liegenden zweiten Trägers (Fk) mit reinen Sinusschwingungen zu übertragen.

12. Mobiles Endgerät nach dem vorhergehenden Anspruch, **dadurch gekennzeichnet, dass** der Sendemodulator in der Lage ist, eine Modulation vom Typ GMSK anzuwenden.

13. Mobiles Endgerät nach einem der Ansprüche 11 bis 12, **dadurch gekennzeichnet, dass** der erste Träger eine Frequenz gleich dem zweiten Träger hat.

14. Mobiles Endgerät nach einem der Ansprüche 11 bis 13, **dadurch gekennzeichnet, dass** die zweiten Mittel in der Lage sind, die zweiten Informationen an einen Schwinger zu übertragen.

15. Mobiles Endgerät nach einem der Ansprüche 11 bis 13, **dadurch gekennzeichnet, dass** die zweiten Mittel in der Lage sind, die zweiten Informationen an ein Kopfhörermikrofon zu übertragen.

16. Mobiles Endgerät nach einem der Ansprüche 11 bis 13, **dadurch gekennzeichnet, dass** die zweiten Mittel in der Lage sind, die zweiten Informationen an einen Schwinger zu übertragen.

17. Mobiles Endgerät nach einem der Ansprüche 11 bis 16, **dadurch gekennzeichnet, dass** die zweiten Mittel in der Lage sind, zwei reine Sinusmodulationen des zweiten Trägers auszuführen.

18. Mobiles Endgerät nach einem der Ansprüche 11 bis 17, **dadurch gekennzeichnet, dass** die zweiten Mittel vorgesehen sind, um mit einer Frequenz des zweiten Trägers innerhalb des normierten Bereichs außerhalb eines Nutzbandes und weniger als 5% außerhalb des Nutzbandes zu arbeiten.

## Claims

1. Communication method between a mobile terminal (1) and an accessory (2) of this mobile terminal, said mobile terminal being able to exchange (3) first data with a base station (4) by modulating a first carrier (Fj) located in a frequency range standardized by signals representative of said first data, using a transmission modulator (14-28), and said mobile terminal also being able to transmit (5) second data to said accessory, and for the transmission of second data to said accessory:
- said transmission modulator of said mobile terminal modulates a second carrier (Fk) located in a standardized frequency range,
- said second data are transmitted by pure sine wave modulation of the signal of said second carrier.

2. Method as in claim 1, **characterized in that** the transmission modulator uses modulation of GMSK type (15).

3. Method as in either of claims 1 to 2, **characterized in that** said second carrier has a frequency equal to that of said first carrier.

4. Method as in either of claims 1 to 3, **characterized in that** said accessory is a vibrator.

5. Method as in any of claims 1 to 3, **characterized in that** said accessory is of head microphone type.

6. Method as in any of claims 1 to 5, **characterized in that** said second data are transmitted by two pure sine wave modulations of the signal of the second carrier.

7. Method as in any of claims 1 to 6, **characterized in that** said second data are received in said accessory by filtering with a low-pass filter (32) the signals transmitted after their demodulation, and by subjecting the filtered signal to envelope detection (33).

8. Method as in any of claims 1 to 7, **characterized in that** a central frequency (Fk) of a local oscillator (31) of said accessory is factory tuned with one of the possible frequencies in said mobile terminal for the first carrier (Fj).

9. Method as in any of claims 1 to 8, **characterized in that** as frequency of said second carrier a frequency is chosen that is located in the standardized range, outside an effective band, and at less than five per cent outside the effective band.

10. Method as in any of claims 1 to 9, **characterized in that**, for modulation, the frequency of a local oscillator (25) is shifted by regulating (43-45) its regulating circuit (41-42) by counter-reaction.

11. Mobile terminal (1) comprising
- first means for the exchange (3) of first data with a base station (4) in cooperation with a transmission modulator (14-28) modulating a first carrier (Fj) located in a frequency range standardized by signals representative of said first data, and
- second means for transmitting second data to an accessory (2)
and said second means are able to transmit said second data in cooperation with said transmission modulator by modulating a second carrier (Fk), located in the standardized frequency range, by pure sine waves.

12. Mobile terminal as in the preceding claim, **characterized in that** said transmission modulator is able to implement modulation of GMSK type.

13. Mobile terminal as in either of claims 11 and 12, **characterized in that** said first carrier has a frequency equal to said second carrier.

14. Mobile terminal as in any of claims 11 to 13, **characterized in that** said second means are able to transmit said second data to a vibrator.

15. Mobile terminal as in any of claims 11 to 13, **characterized in that** said second means are able to transmit said second data to a head microphone.

16. Mobile terminal as in any of claims 11 to 13, **characterized in that** said second means are able to transmit said second data to a vibrator.

17. Mobile terminal as in any of claims 11 to 16, **characterized in that** said second means are able to conduct two pure sine wave modulations of said second carrier.

18. Mobile terminal as in any of claims 11 to 17, **characterized in that** said second means are designed to operate with a frequency of said second frequency located in the standardized range, outside an effective band, and at less than five per cent outside the effective band.
